# EUROPEAN PATENT SPECIFICATION

(11) **EP 3 676 507 B1**
(45) Date of publication and mention of the grant of the patent: **18.08.2021**
(21) Application number: 18845324.5
(22) Date of filing: 18.09.2018
(51) Int. Cl.: F16D 13/75

(54) **CLUTCH COVER ASSEMBLY WITH ADJUSTMENT MECHANISM**
KUPPLUNGSDECKELANORDNUNG MIT VERSTELLMECHANISMUS
ENSEMBLE COUVERCLE D'EMBRAYAGE AVEC MÉCANISME DE RÉGLAGE

(30) Priority: 20.09.2017 TR 201713960
(43) Date of publication of application: 08.07.2020
(73) Proprietor: Dönmez Debriyaj Sanayi Ve Ticaret Anonim Sirketi, 10039 Sokak Çigli/Izmir (TR)
(72) Inventor: AYGÜL, Erkan, 10039 Sokak Çigli/Izmir (TR)
(74) Representative: Yamankaradeniz, Kemal
(86) International application number: PCT/TR2018/050503
(87) International publication number: WO 2019/059866

(56) References cited:
- DE-A1-102009 005 738
- GB-A- 2 372 079

## Description

### Technical Field

The invention relates to an adjustment mechanism that compensates the wear by pressing the clutch pedal once when the wear on clutch disc lining, on the clutch pressure plate and on the flywheel lining surface starts to occur, ensures that the clamp and release bearing load are always at the same value, that the diaphragm spring running position stays constant for the rest of its life.

### Prior Art

In the current applications, when wear on the clutch disc lining, on the clutch pressure plate and on the flywheel lining surface occurs, there is no adjustment mechanism to compensate for these wear at all levels, to keep the clamp and release bearing load at the same value at all times and instantly, and to keep the diaphragm spring running position instantly at the same value at all times for the rest of its life.

In the present technique, there are systems that can compensate for a limited distance on a tooth, or for certain steps and borders.

In those systems where the technique is known, it is a matter of compulsions to be made when there are wears as much as the thread pitch or step clearance. For example, if we assume that the thread pitch or step clearance is 0.2 mm, then since the force and the positions will change as the average 10000 km path of the vehicle rises to 0.2 mm wear, all the negative effects will be reflected to the clamp and release bearing loads, the pedal force and the comfort of the driver.

In the patent search of the prior art, a German patent document no. DE19959584B4 was found. It refers to a setting element used to provide automatic wear compensation, including an axially displaceable pressure plate and a wear adjustment device, which is fixed to a main disk to rotate around an axis.

Another application is patent no. EP2218931B1. It refers to a locking mechanism comprising a detection element which detects wears and a setting element with a main housing block.

Another application is patent no. GB2372079A. It refers to a clutch comprises cover supporting diaphragm spring on rings; ramped automatic adjustor pivot ring with fulcrum for engaging the spring and pressure plate rotationally fixed to the cover by straps and having pivot ring engaging ramps.

Another application is patent no. DE102009005738A1. It refers to a a friction clutch with an adjusting device with itself on the clutch housing and supporting an axially displaceable pressure plate acting lever spring with radially oriented lever elements, which are acted upon radially inwardly by an actuator axially for actuating the friction clutch.

As a result, improvements are made in the clutch cover assembly adjustment mechanism with the developing technology, so new structures are needed to eliminate the disadvantages mentioned above and to bring solutions to the existing systems.

### Description of the Invention

The present invention relates to a clutch cover assembly adjustment mechanism that meets the above-mentioned requirements, eliminates all disadvantages and brings some additional advantages.

The main purpose of the invention is to ensure that all wear is compensated once the driver presses the clutch pedal by means of the adjustment mechanism in the clutch cover assembly.

One purpose of the invention is to ensure that all force values and distances are brought to the first assembled position of the product, regardless of the amount of wear on the clutch cover assembly mechanism.

The purpose of the invention is to cut the contact between the stopper gap on the adjustment member and the ramp on the set-up ramp and so, to move the set-up ramp by the support spring thereby set-up element bears to cover when the wear occurs. Likewise, when the driver presses the clutch pedal once, the return spring and surface of the stopper gap of the adjustment member rotate clockwise until touches to the stopping plate to allow the pressure plate to be approximated to the motor side as much as the wear amount.

Another purpose of the invention is performing the adjustment without any mechanism such as thread, step clearance in the adjustment mechanism.

Another purpose of the invention is that when the most sensitive wear occurs, make the wear compensation instantly due to the angular design on the stopping ramp and the set-up ramp, the bearing channels on the pressure plate and the gap on the adjustment member are worked the synchronized with the stopper

In order to realize all the advantages mentioned above and which will be understood from the following detailed description, the invention comprises;
- a pressure plate that provide the clutch disc lining to compress and form a contact surface for the parts,
- a cover that forms a protective surface to mentioned pressure plate and other parts,
- a diaphragm spring and a return spring used in the adjustment mechanism of the clutch system, wherein; characterized by
- a set-up ramp that is connected to the bedding slot of the mentioned pressure plate and which the stopping ramp is positioned on,
- a stopping ramp connected to the stopper and the set-up element,
- a stopper connected to the mentioned stopping ramp and the pressure plate,
- an adjustment member located on the connection plate,
- a set-up element which ensures that the stopping ramp remains stationary when wear occurs,
- a support spring for performing the pulling action until mentioned set-up ramp bears on the stopping ramp when wear occurs,
- a hook for connecting mentioned support spring to the return spring,
- a cover hole drilled on the cover to ensure that the mentioned set-up element can be operated,
- a gap drilled on the diaphragm spring to enable the proper operation of the mentioned set-up element and the stopping ramp,
- a stopper gap on the adjustment member, which allows the stopper to remain in a constant contact with the adjustment member.

The structural and characteristic features and all advantages of the invention will be understood more clearly under favor of the drawings below and in the detailed description made by referring these figures. Therefore, the evaluation should be made considering these figures and detailed explanations.

### Brief Description of the Figures

In order to be able to understand the advantages of the present invention together with the additional elements, it is necessary to evaluate it with the figures explained below.
- Figure-1;: a two-dimensional top assembled view of the adjustment mechanism of the invention.
- Figure-2;: a two-dimensional side view, section-A, of the adjustment mechanism of the invention.
- Figure-3;: the top perspective assembled view of the adjustment mechanism of the invention, which is mounted on the pressure plate.
- Figure-4;: another two-dimensional top assembled view of the adjustment mechanism of the invention.
- Figure-5;: the two-dimensional top view of the adjustment mechanism of the invention, which is mounted on the pressure plate.

### Reference Numbers

- 100-: Adjustment mechanism
- 101-: Pressure plate
101.1- Bedding slot
101.2- Mounting protrusion
- 102-: Return spring
- 103-: Cover
103.1- Cover hole
- 104-: Diaphragm spring
104.1- Gap
- 105-: Hook
- 106-: Adjustment member
106.1- Stopping channel
106.2- Hook hole
106.3- Adjuster ramp
- 107-: Support spring
- 108-: Set-up element
- 109-: Set-up ramp
109.1- Angled set-up surface
- 110-: Stopper
110.1- Protrusion
- 111-: Stopping ramp
111.1- Angled stop surface
- A-: Section A

### Detailed Description of the Invention

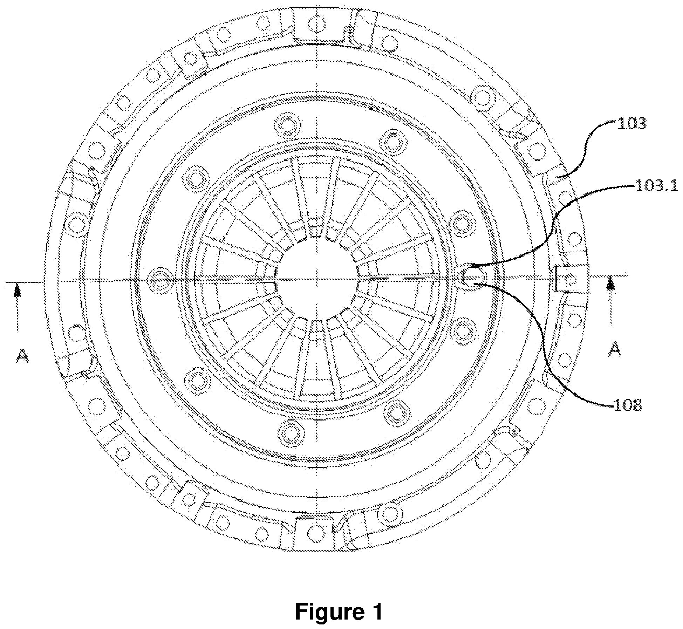

Figure 1 illustrates the two-dimensional assembled view of the clutch cover assembly adjustment mechanism (100) of the invention from the top. The invention allows the driver to compensate the wear by pressing the clutch pedal once when the wear on clutch disc lining, on the clutch pressure plate (101) and on the flywheel lining surface starts to occur, ensures that the clamp and release bearing load are always at the same value, and that the diaphragm spring running position stays constant for the rest of its life.

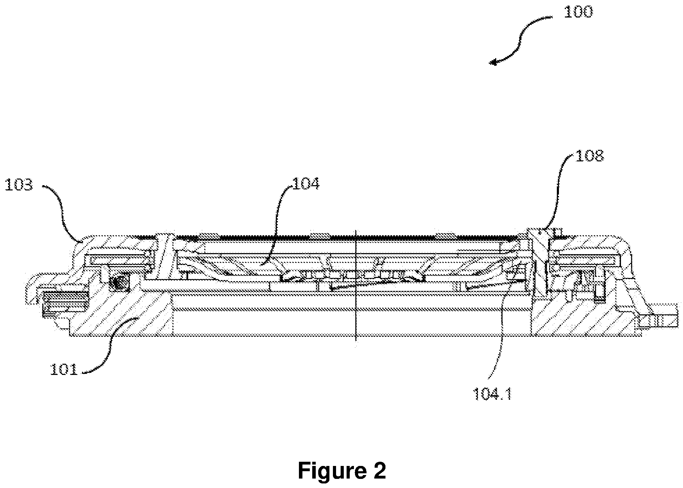

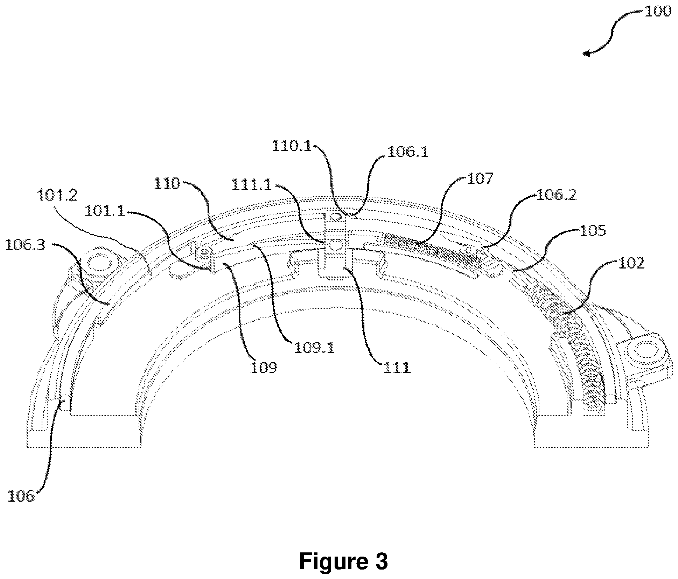

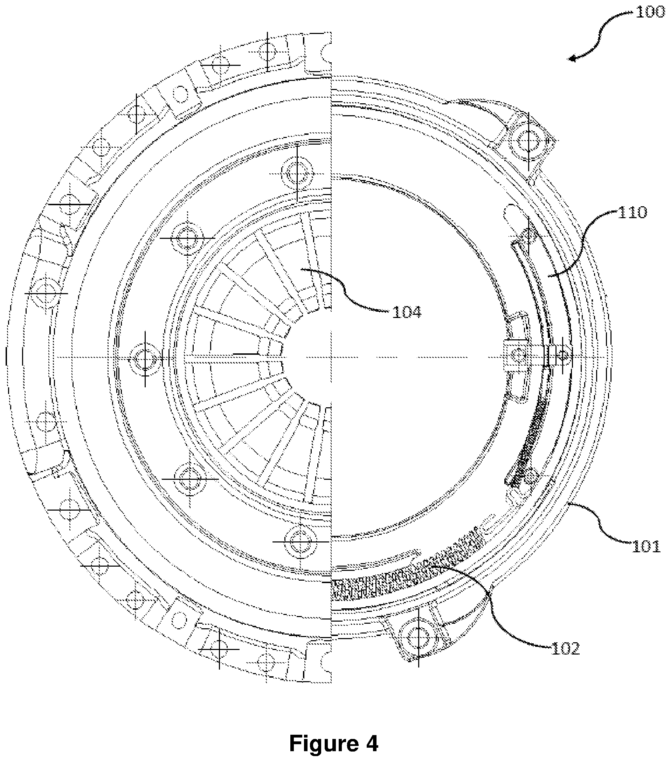

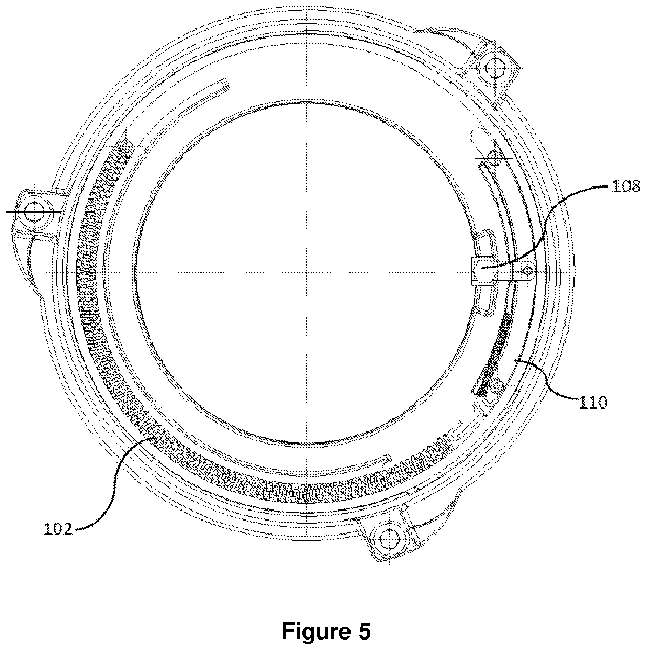

In Figure 2, the two-dimensional Section-A (A) view of the adjustment mechanism (100) in the clutch cover assembly, and in Figure 4, the other two-dimensional view of the adjustment mechanism (100) in the clutch cover assembly, is illustrated. In the invention, there is a pressure plate (101) that enables the clutch disc lining to compress and form a contact surface for the parts. Also, there is cover (103) that forms a protective surface to mentioned pressure plate (101) and other parts. Then, there is a diaphragm spring (104) and a return spring (102) used in the working mechanism of the clutch system. Also, there is a set-up ramp (109) that is connected to the bedding slot (101.1) of the mentioned pressure plate (101) and on which the stopping ramp (111) is positioned. There is a stopping ramp (111) connected both to the stopper (110) and to the set-up element (108). There is a stopper (110) which is connected to the stopping ramp (111) and to the pressure plate (101) mentioned. There is a protrusion (110.1) which allows the stopper (110) to be connected to the stopping channel (106.1) which drilled on the adjustment member (106). There is an adjustment member (106) positioned on the connection plate (101). This adjustment member (106) has a truncated curved circle form and contains a radiated surface on its upper surface. A hook hole (106.2) is provided which allows the mentioned adjustment member (106) to be connected to the hook (105) and which drilled over the adjustment member (106). Positioning of the adjustment member (106) onto the mounting protrusion (101.2) on the pressure plate (101) is provided by the adjuster ramp (106.3). In order to ensure the positioning of the adjuster ramp (106.3), there is a mounting protrusion (101.2) on the pressure plate (101). Set-up element (108) ensures that the stopping ramp (111) stays stationary when the wear occurs. A setting bolt is selected as the set-up element (108). A support spring (107) is also provided for performing the pulling action until mentioned set-up ramp (109) bears on the stopping ramp (111) when wear occurs. The hook (105) is provided to connect the support spring (107) with the return spring (102). There is a cover hole (103.1) drilled on the cover (103) to ensure that the mentioned set-up element (108) can be operated. A gap (104.1) is drilled on the diaphragm spring (104) to enable the proper operation of the mentioned set-up element (108) and the stopping ramp (111). There is an angled stop surface (111.1) which ensures that the stopping ramp (111) is in contact with the set-up ramp (109). There is an angled set-up surface (109.1) which allows the set-up ramp (109) to be in contact with the stopping ramp (111). There is a stopping channel (106.1) on the adjustment member (106), which allows the stopper (110) to remain in a constant contact with the adjustment member (106).

In Figure-3, the top perspective assembled view of the adjustment mechanism (100) of the invention, which is mounted on the pressure plate (101), and in Figure-5; the two-dimensional top view of the adjustment mechanism (100) of the invention, which is mounted on the pressure plate (101) is illustrated.

### The working principle of the clutch pressure adjustment mechanism (100) of the invention is as follows;

When the wear on clutch disc lining, on the clutch pressure plate (101) and on the flywheel lining surface starts to occur, the pressure plate (101), the adjustment member (106), the set-up ramp (109), the hook (105), the support spring (107), and the return spring (102) proceed to the side of the engine. The set-up element (108) is stopped at the surface of the cover hole (103.1) located on the cover. (103). Thus, the stopping ramp (111) which is connected to the set-up element (108) remains at a fixed distance. Thus there is a space up to the amount of wear occurs between the protrusion (110.1) of the stopper's (110) end connected to the stopping ramp (111) and the stopping channel (106.1) of the adjustment member (106) towards the engine side. The same space also occurs between the stopping ramp (111) and the set-up ramp (109) which approaching the engine side. The support spring (107), which is strained by this existing space, returns/pulls the set-up ramp (109) in the bedding slot (101.1) within the pressure plate (101) in the clockwise direction. Thus, the angled set-up surface (109.1) on the set-up ramp (109) bears the angled stop surface (111.1) on the stopping ramp (111) and in this way, the space that is between the stopper (110) and the adjustment member (106) is fixed. When the driver presses the clutch pedal, this time, the pressure plate (101), the adjustment member (106), the set-up ramp (109), the hook (105), the support spring (107), stopper (110), the set-up element (108) and the return spring (102) move towards the gearbox side. When the motion is running on, the remaining fixed space between the stopper (110) and the adjustment member (106) is closed by rotating the adjustment member (106). The adjustment member (106) is rotated on the adjuster ramp (106.3) and mounting protrusion (101.2) until the stopping channel (106.1) comes into contact to the stopper (110) by the return spring (102).

Due to the adjustment mechanism (100), the amount of wear is compensated for no matter how much. All force values and distances are brought to the first assembled position of the product.

## Claims

1. An adjustment mechanism (100) comprising a cover (103) forming a protective surface for a pressure plate (101) and the other parts, at least one diaphragm spring (104), at least one return spring (102), an adjustment member (106) positioned on the pressure plate (101), a setup ramp (109) and a stopping ramp (111);
**characterized in that**:
- the set-up ramp (109) is connected to a bedding slot (101.1) of the mentioned pressure plate (101) and on which the stopping ramp (111) is positioned,
- the stopping ramp (111) is connected both to a stopper (110) and to a set-up element (108),
- the stopper (110) is connected to the stopping ramp (111) and to the pressure plate (101) mentioned,
- the set-up element (108) ensures that the stopping ramp (111) remains stationary when wear occurs,
- a support spring (107) for performing the pulling action until mentioned set-up ramp (109) bears on the stopping ramp (111) when wear occur,
- a cover hole (103.1) drilled on the cover (103) to ensure that the mentioned set-up element (108) can be operated,
- a gap (104.1) drilled on the diaphragm spring (104) to enable the proper operation of the mentioned set-up element (108) and the stopping ramp (111),
- a stopping channel (106.1) on the adjustment member (106), which allows the stopper (110) to remain in a constant contact with the adjustment member (106).

2. A clutch pressure adjustment mechanism (100) according to Claim-1, **characterized by** comprising; a hook (105) for connecting mentioned support spring (107) to the return spring (102).

3. A clutch pressure adjustment mechanism (100) according to Claim-1, **characterized by** comprising; a hook hole (106.2) which allows the mentioned adjustment member (106) to be connected to the hook (105) and drilled over the adjustment member (106).

4. A clutch pressure adjustment mechanism (100) according to Claim-1, **characterized by** comprising; an adjuster ramp (106.3) to position the adjustment member (106) onto the mounting protrusion (101.2) on the pressure plate (101).

5. A clutch pressure adjustment mechanism (100) according to Claim-1, **characterized by** comprising; a mounting protrusion (101.2) on the pressure plate (101) to ensure the positioning of the adjuster ramp (106.3).

6. A clutch pressure adjustment mechanism (100) according to Claim-1, **characterized by** comprising; an adjustment member (106) which has a truncated curved circle form and contains a radius on its upper surface.

7. A clutch pressure adjustment mechanism (100) according to Claim-1, **characterized by** comprising; a protrusion (110.1) which allows the stopper (110) to be connected to the stopping channel (106.1) which drilled on the adjustment member (106).

8. A clutch pressure adjustment mechanism (100) according to Claim-1, **characterized by** comprising; a setting bolt that is selected as the set-up element (108).

9. A clutch pressure adjustment mechanism (100) according to Claim-1, **characterized by** comprising; an angled stop surface (111.1) which ensures that the stopping ramp (111) is in contact with the set-up ramp (109).

10. A clutch pressure adjustment mechanism (100) according to Claim-1, **characterized by** comprising; an angled set-up surface (109.1) which allows the set-up ramp (109) to be in contact with the stopping ramp (111).

## Patentansprüche

1. Einstellmechanismus (100), der eine Abdeckung (103) umfasst, die eine Schutzoberfläche für eine Druckplatte (101) und die anderen Teile bildet, mindestens eine Membranfeder (104), mindestens eine Rückstellfeder (102), ein an der Druckplatte (101) positioniertes Einstellelement (106), eine Einrichtungsrampe (109) und eine Stopprampe (111);
**dadurch gekennzeichnet, dass**:
- die Einrichtungsrampe (109) mit einem Einbettungsschlitz (101.1) der genannten Druckplatte (101) verbunden ist, und auf der die Stopprampe (111) positioniert ist,
- die Stopprampe (111) sowohl mit einem Stopper (110) als auch mit einem Einrichtungselement (108) verbunden ist,
- der Stopper (110) mit der Stopprampe (111) und mit der genannten Druckplatte (101) verbunden ist,
- das Einrichtungselement (108) sicherstellt, dass die Stopprampe (111) bei eintretendem Verschleiß ortsfest bleibt,
- eine Stützfeder (107) zur Ausführung der Zugtätigkeit bis die genannte Einrichtungsrampe (109) an der Stopprampe (111) lagert, wenn Verschleiß eintritt, bereitgestellt ist,
- eine Abdeckungsöffnung (103.1) an der Abdeckung (103) gebohrt ist, um sicherzustellen, dass das genannte Einrichtungselement (108) betätigt werden kann,
- ein Spalt (104.1) an der Membranfeder (104) gebohrt ist, um den zweckmäßigen Betrieb des genannten Einrichtungselements (108) und der Stopprampe (111) zu ermöglichen,
- ein Stoppkanal (106.1) an dem Einstellelement (106) bereitgestellt ist, der es ermöglicht, dass der Stopper (110) in einem konstanten Kontakt mit dem Einstellelement (106) verbleiben kann.

2. Kupplungsdruckeinstellmechanismus (100) nach Anspruch 1, **dadurch gekennzeichnet, dass** dieser folgendes umfasst: einen Haken (105) zur Verbindung der genannten Stützfeder (107) mit der Rückstellfeder (102).

3. Kupplungsdruckeinstellmechanismus (100) nach Anspruch 1, **dadurch gekennzeichnet, dass** dieser folgendes umfasst: eine Hakenöffnung (106.2), die eine Verbindung des genannten Einstellelements (106) mit dem Haken (105) ermöglicht und über dem Einstellelement (106) gebohrt ist.

4. Kupplungsdruckeinstellmechanismus (100) nach Anspruch 1, **dadurch gekennzeichnet, dass** dieser folgendes umfasst: eine Einstellrampe (106.3) zur Positionierung des Einstellelements (106) auf einem Befestigungsvorsprung (101.2) an der Druckplatte (101).

5. Kupplungsdruckeinstellmechanismus (100) nach Anspruch 1, **dadurch gekennzeichnet, dass** dieser folgendes umfasst: einen Befestigungsvorsprung (101.2) an der Druckplatte (101) zur Sicherstellung der Positionierung der Einstellrampe (106.3).

6. Kupplungsdruckeinstellmechanismus (100) nach Anspruch 1, **dadurch gekennzeichnet, dass** dieser folgendes umfasst: ein Einstellelement (106), das eine abgeschnittene, gekrümmte Kreisform aufweist und auf dessen oberen Oberfläche einen Radius aufweist.

7. Kupplungsdruckeinstellmechanismus (100) nach Anspruch 1, **dadurch gekennzeichnet, dass** dieser folgendes umfasst: einen Vorsprung (110.1), der eine Verbindung des Stoppers (110) mit dem Stoppkanal (106.1) ermöglicht, gebohrt an das Einstellelement (106).

8. Kupplungsdruckeinstellmechanismus (100) nach Anspruch 1, **dadurch gekennzeichnet, dass** dieser folgendes umfasst: einen Einrichtungsbolzen, der als das Einrichtungselement (108) ausgewählt ist.

9. Kupplungsdruckeinstellmechanismus (100) nach Anspruch 1, **dadurch gekennzeichnet, dass** dieser folgendes umfasst: eine angewinkelte Anschlagoberfläche (111.1), die sicherstellt, dass sich die Stopprampe (111) in Kontakt mit der Einrichtungsrampe (109) befindet.

10. Kupplungsdruckeinstellmechanismus (100) nach Anspruch 1, **dadurch gekennzeichnet, dass** dieser folgendes umfasst: eine angewinkelte Einrichtungsoberfläche (109.1), die es ermöglicht, dass sich die Einrichtungsrampe (109) in Kontakt mit der Stopprampe (111) befindet.

## Revendications

1. Mécanisme de réglage (100) comprenant un couvercle (103) formant une surface de protection pour une plaque de pression (101) et les autres pièces, au moins un ressort à membrane (104), au moins un ressort de rappel (102), un élément de réglage (106) positionné sur la plaque de pression (101), une rampe de mise en place (109) et une rampe d'arrêt (111) ;
**caractérisé en ce que** :
- la rampe de mise en place (109) est reliée à une fente d'assise (101.1) de la plaque de pression (101) mentionnée et sur laquelle la rampe d'arrêt (111) est positionnée,
- la rampe d'arrêt (111) est reliée à la fois à un bouchon (110) et à un élément de mise en place (108),
- le bouchon (110) est relié à la rampe d'arrêt (111) et à la plaque de pression (101) mentionnée,
- l'élément de mise en place (108) assure que la rampe d'arrêt (111) reste immobile en cas d'usure,
- un ressort d'appui (107) pour effectuer l'action de traction jusqu'à ce que la rampe de mise en place (109) mentionnée s'appuie sur la rampe d'arrêt (111) lorsque l'usure se produit,
- un trou de couvercle (103.1) percé dans le couvercle (103) pour assurer que l'élément de mise en place (108) mentionné puisse être actionné,
- un espace (104.1) percé dans le ressort à membrane (104) pour permettre le bon fonctionnement de l'élément de mise en place (108) mentionné et de la rampe d'arrêt (111),
- un canal d'arrêt (106.1) sur l'élément de réglage (106), qui permet au bouchon (110) de rester en contact constant avec l'élément de réglage (106).

2. Mécanisme de réglage de pression d'embrayage (100) selon la revendication 1, **caractérisé en ce qu'**il comprend un crochet (105) pour relier le ressort de support mentionné (107) au ressort de retour (102).

3. Mécanisme de réglage de pression d'embrayage (100) selon la revendication 1, **caractérisé en ce qu'**il comprend un trou de crochet (106.2) qui permet à l'élément de réglage (106) mentionné d'être relié au crochet (105) et percé dans l'élément de réglage (106).

4. Mécanisme de réglage de pression d'embrayage (100) selon la revendication 1, **caractérisé en ce qu'**il comprend une rampe de réglage (106.3) pour positionner l'élément de réglage (106) sur la saillie de montage (101.2) sur la plaque de pression (101).

5. Mécanisme de réglage de pression d'embrayage (100) selon la revendication 1, **caractérisé en ce qu'**il comprend une saillie de montage (101.2) sur la plaque de pression (101) pour assurer le positionnement de la rampe de réglage (106.3).

6. Mécanisme de réglage de pression d'embrayage (100) selon la revendication 1, **caractérisé en ce qu'**il comprend un élément de réglage (106) qui a une forme de cercle incurvé tronqué et contient un rayon sur sa surface supérieure.

7. Mécanisme de réglage de pression d'embrayage (100) selon la revendication 1, **caractérisé en ce qu'**il comprend une saillie (110.1) qui permet au bouchon (110) d'être relié au canal d'arrêt (106.1) qui est percé dans l'élément de réglage (106).

8. Mécanisme de réglage de pression d'embrayage (100) selon la revendication 1, **caractérisé en ce qu'**il comprend un boulon de réglage qui est sélectionné comme élément de mise en place (108).

9. Mécanisme de réglage de pression d'embrayage (100) selon la revendication 1, **caractérisé en ce qu'**il comprend une surface d'arrêt inclinée (111.1) qui assure que la rampe d'arrêt (111) est en contact avec la rampe de mise en place (109).

10. Mécanisme de réglage de pression d'embrayage (100) selon la revendication 1, **caractérisé en ce qu'**il comprend une surface de mise en place inclinée (109.1) qui permet à la rampe de mise en place (109) d'être en contact avec la rampe d'arrêt (111).
